# EUROPEAN PATENT APPLICATION

(11) **EP 1 643 784 A1**
(43) Date of publication of application: **05.04.2006**
(21) Application number: 04023237.3
(22) Date of filing: 29.09.2004
(51) Int. Cl.: H04Q 7/38, H04L 12/28

(54) **Delay estimation for uplink transmissions**

(71) Applicant: MATSUSHITA ELECTRIC INDUSTRIAL CO., LTD., Kadoma-shi, Osaka 571-8501 (JP)
(72) Inventor: Petrovic, Dragan, 64295 Darmstadt (DE); Löhr, Joachim, 64287 Darmstadt (DE); Seidel, Eiko, 64285 Darmstadt (DE); Fukui, Akito, Yokohama-shi, 224-8539 (JP)
(74) Representative: Grünecker, Kinkeldey, Stockmair & Schwanhäusser Anwaltssozietät

(57) **Abstract**

The invention relates to a method for configuring uplink data transmission in a mobile communication system comprising a radio access network and a mobile terminal. Moreover, the invention relates to a network element controlling the user plane of uplink transmissions as well as a network element controlling mobile terminal related functions of the control plane. Further, a base station in the radio access network is provided. In order to improve uplink data transmission efficiency in a mobile communication system the present invention suggests to measure/estimate the delay of the interface between a base station and a network element controlling the user plane, such as the RNC/UPS, and to configure at least one transport channel parameter based on the delay. The base station is thereby relaying uplink protocol data units from a transmitting mobile terminal to the network element controlling the user plane. Thereby the uplink data transmission efficiency may be significantly improved.

## Description

### FIELD OF THE INVENTION

The invention relates to a method for configuring uplink data transmission in a mobile communication system comprising a radio access network and a mobile terminal. Moreover, the invention relates to a network element controlling the user plane of uplink transmissions as well as a network element controlling mobile terminal related functions of the control plane. Further, a base station in the radio access network is provided.

### TECHNICAL BACKGROUND

W-CDMA (Wideband Code Division Multiple Access) is a radio interface for IMT-2000 (International Mobile Communication), which was standardized for use as the 3^{rd} generation wireless mobile telecommunication system. It provides a variety of services such as voice services and multimedia mobile communication services in a flexible and efficient way. The standardization bodies in Japan, Europe, USA, and other countries have jointly organized a project called the 3^{rd} Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4 and Release 5 and discussion on further improvements is ongoing under the scope of Release 6.

The dedicated channel (DCH) for downlink and uplink and the downlink shared channel (DSCH) have been defined in Release 99 and Release 4. In the following years, the developers recognized that for providing multimedia services - or data services in general - high speed asymmetric access had to be implemented. In Release 5 the high-speed downlink packet access (HSDPA) was introduced. The new high-speed downlink shared channel (HS-DSCH) provides downlink high-speed access to the user from the UMTS Radio Access Network (RAN) to the communication terminals, called user equipments in the UMTS specifications.

### Packet Scheduling

Packet scheduling may be a radio resource management algorithm used for allocating transmission opportunities and transmission formats to the users admitted to a shared medium. Scheduling may be used in packet based mobile radio networks in combination with adaptive modulation and coding to maximize throughput/capacity by e.g. allocating transmission opportunities to the users in favorable channel conditions. The packet data service in UMTS may be applicable for the interactive and background traffic classes, though it may also be used for streaming services. Traffic belonging to the interactive and background classes is treated as non real time (NRT) traffic and is controlled by the packet scheduler. The packet scheduling methodologies can be characterized by:
- **Scheduling period/frequency**: The period over which users are scheduled ahead in time.
- **Serve order**: The order in which users are served, e.g. random order (round robin) or according to channel quality (C/I or throughput based).
- **Allocation method**: The criterion for allocating resources, e.g. same data amount or same power/code/time resources for all queued users per allocation interval.

The packet scheduler for uplink is distributed between Radio Network Controller (RNC) and user equipment in 3GPP UMTS R99/R4/R5. On the uplink, the air interface resource to be shared by different users is the total received power at a Node B, and consequently the task of the scheduler is to allocate the power among the user equipment(s). In current UMTS R99/R4/R5 specifications the RNC controls the maximum rate/power a user equipment is allowed to transmit during uplink transmission by allocating a set of different transport formats (modulation scheme, code rate, etc.) to each user equipment.

The establishment and reconfiguration of such a TFCS (transport format combination set) may be accomplished using Radio Resource Control (RRC) messaging between RNC and user equipment. The user equipment is allowed to autonomously choose among the allocated transport format combinations based on its own status e.g. available power and buffer status. In current UMTS R99/R4/R5 specifications there is no control on time imposed on the uplink user equipment transmissions. The scheduler may e.g. operate on transmission time interval basis.

### UMTS Architecture

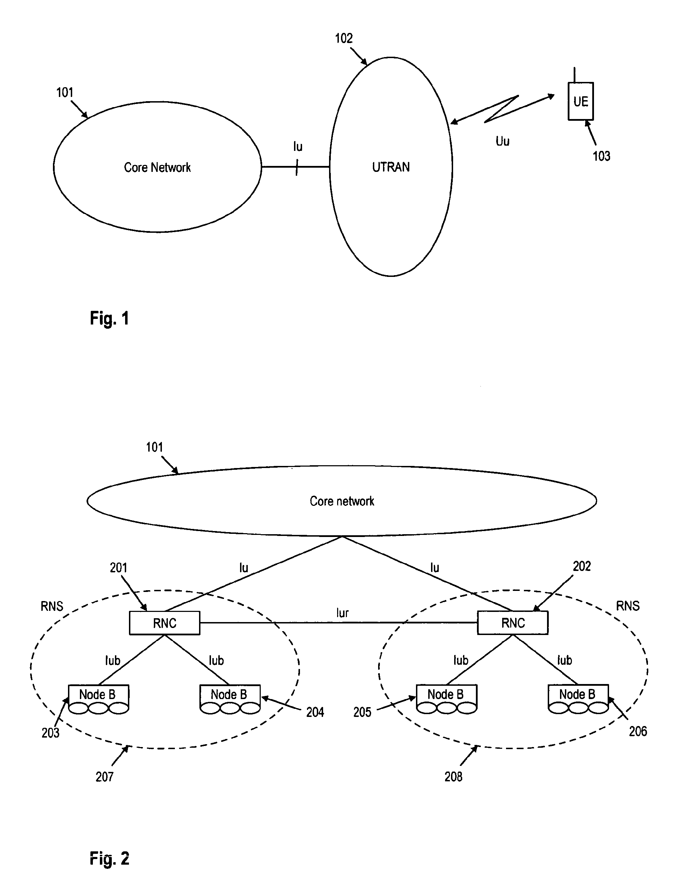

The high level R99/4/5 architecture of Universal Mobile Telecommunication System (UMTS) is shown in Fig. 1 (see 3GPP TR 25.401: "UTRAN Overall Description", available from http://www.3gpp.org). The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of these network elements are defined by open interfaces (lu, Uu). It should be noted that UMTS system is modular and it is therefore possible to have several network elements of the same type.

In the sequel two different architectures will be discussed. They are defined with respect to logical distribution of functions across network elements. In actual network deployment, each architecture may have different physical realizations meaning that two or more network elements may be combined into a single physical node.

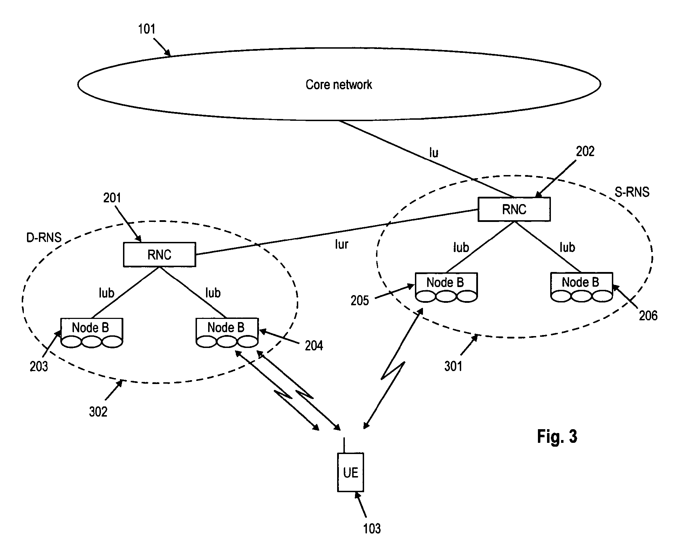

Fig. 2 illustrates the current architecture of UTRAN. A number of Radio Network Controllers (RNCs) 201, 202 are connected to the CN 101. Each RNC 201, 202 controls one or several base stations (Node Bs) 203, 204, 205, 206, which in turn communicate with the user equipments. An RNC controlling several base stations is called Controlling RNC (C-RNC) for these base stations. A set of controlled base stations accompanied by their C-RNC is referred to as Radio Network Subsystem (RNS) 207, 208. For each connection between User Equipment and the UTRAN, one RNS is the Serving RNS (S-RNS). It maintains the so-called lu connection with the Core Network (CN) 101. When required, the Drift RNS 302 (D-RNS) 302 supports the Serving RNS (S-RNS) 301 by providing radio resources as shown in Fig. 3. Respective RNCs are called Serving RNC (S-RNC) and Drift RNC (D-RNC). It is also possible and often the case that C-RNC and D-RNC are identical and therefore abbreviations S-RNC or RNC are used.

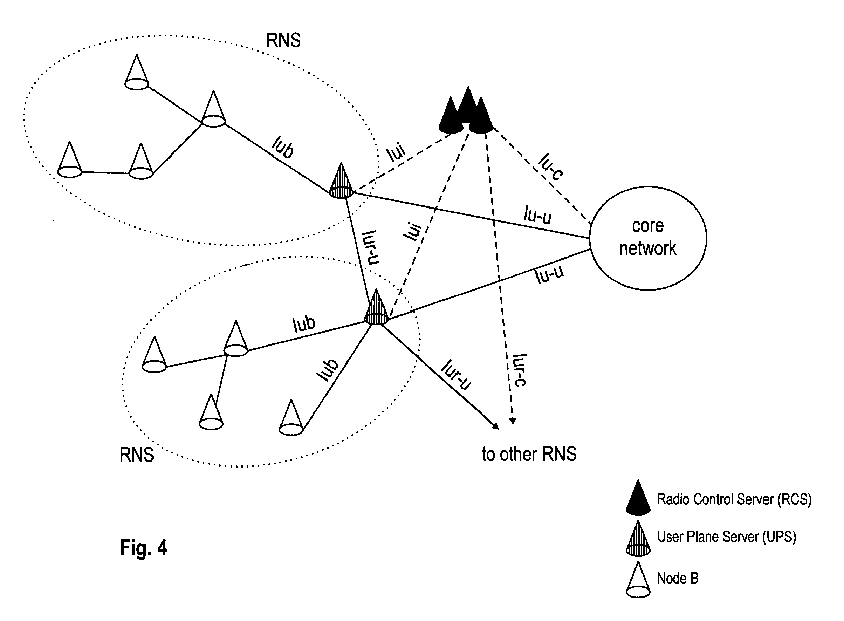

Fig. 4 illustrates a radio access network architecture providing functional separation in network elements (separated network architecture). The key point of the proposed architecture shown in Fig. 4 is that the functions of the RNC are decomposed and mapped onto two new types of network entities that complement today's Radio Network Controllers (RNCs):
- Radio Control Servers (RCS) and
- User Plane Servers (UPS).

As a consequence, the termination points of the user- and the control plane of existing interfaces are split:
The control plane of lu and lur (lu-c and lur-c respectively) is terminated in the RCS, while the user plane of lu and lur (lu-u and lur-u respectively) is terminated in the UPS. The User Plane Servers may be controlled by Radio Control Servers over a new RAN-internal interface, which is called the lui.

The Radio Control Servers mainly perform user-related control functions and co-ordinate radio resource management. E.g. the User Plane Servers may perform cell related control functions and process radio frames (including macro-diversity combining) and may forward user-related control messages between UEs and RCSs (in both directions).

User Plane Servers may be moved relatively close to the Node Bs (or access points supporting radio access technology other than UMTS WCDMA) while control plane functionality can remain more centralized on Radio Control Servers that might be organized in pools or clusters.

As indicated above, the new lui interface is used for signaling and data transport between Radio Control Servers and User Plane Servers. All other interfaces can be derived from existing UTRAN interfaces, which also minimizes the impact of the distributed UTRAN architecture on the external interfaces of the RAN.

For more details on the separated network architecture it is referred to 3GPP TR 25.897: "Feasibility Study on the Evolution of the UTRAN Architecture", available at http://www.3gpp.org.

### Enhanced Uplink Dedicated Channel (E-DCH)

Uplink enhancements for Dedicated Transport Channels (DTCH) are currently studied by the 3GPP Technical Specification Group RAN (see 3GPP TR 25.896: "Feasibility Study for Enhanced Uplink for UTRA FDD (Release 6)", available at http://www.3gpp.org).

Since the use of IP-based services become more important, there is an increasing demand to improve the coverage and throughput of the RAN as well as to reduce the delay of the uplink dedicated transport channels. Streaming, interactive and background services could benefit from this enhanced uplink.

One enhancement is the usage of adaptive modulation and coding schemes (AMC) in connection with Node B controlled scheduling, thus an enhancement of the Uu interface. In the existing R99/R4/R5 system the uplink maximum data rate control resides in the RNC. By relocating the scheduler in the Node B the latency introduced due to signaling on the interface between RNC and Node B may be reduced and thus the scheduler may be able to respond faster to temporal changes in the uplink load. This may reduce the overall latency in communications of the user equipment with the RAN. Therefore Node B controlled scheduling is capable of better controlling the uplink interference and smoothing the noise rise variance by allocating higher data rates quickly when the uplink load decreases and respectively by restricting the uplink data rates when the uplink load increases. The coverage and cell throughput may be improved by a better control of the uplink interference.

Another technique, which may be considered to reduce the delay on the uplink, is introducing a shorter TTI (Transmission Time Interval) length for the E-DCH compared to other transport channels. A transmission time interval length of 2ms is currently investigated for use on the E-DCH, while a transmission time interval of 10ms is commonly used on the other channels. Hybrid ARQ, which was one of the key technologies in HSDPA, is also considered for the enhanced uplink dedicated channel. The Hybrid ARQ protocol between a Node B and a user equipment allows for rapid retransmissions of erroneously received data units, and may thus reduce the number of RLC (Radio Link Control) retransmissions and the associated delays. This may improve the quality of service experienced by the end user.

To support enhancements described above, a new MAC sub-layer is introduced which will be called MAC-e in the following (see 3GPP TSG RAN WG1, meeting #31, Tdoc R01-030284, "Scheduled and Autonomous Mode Operation for the Enhanced Uplink"). The entities of this new sub-layer, which will be described in more detail in the following sections, may be located in user equipment and Node B. On user equipment side, the MAC-e performs the new task of multiplexing upper layer data (e.g. MAC-d) data into the new enhanced transport channels and operating HARQ protocol transmitting entities.

Further, the MAC-e sub-layer may be terminated in the S-RNC during handover at the UTRAN side. Thus, the reordering buffer for the reordering functionality provided may also reside in the S-RNC.

### E-DCH MAC Architecture at the REL99/4/5 UTRAN

In soft handover operation the MAC-e entities in the E-DCH MAC Architecture at the UTRAN side may be distributed across Node B (MAC-e_{b}) and S-RNC (MAC-eᵣ). The scheduler in Node B chooses the active users and performs rate control by determining and signaling a commanded rate, suggested rate or TFC (Transport Format Combination) threshold that limits the active user (UE) to a subset of the TCFS (Transport Format Combination Set) allowed for transmission.

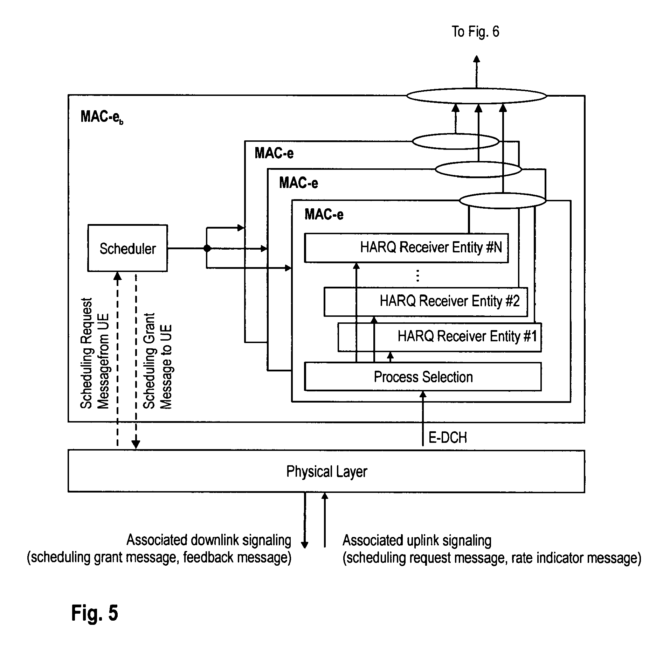

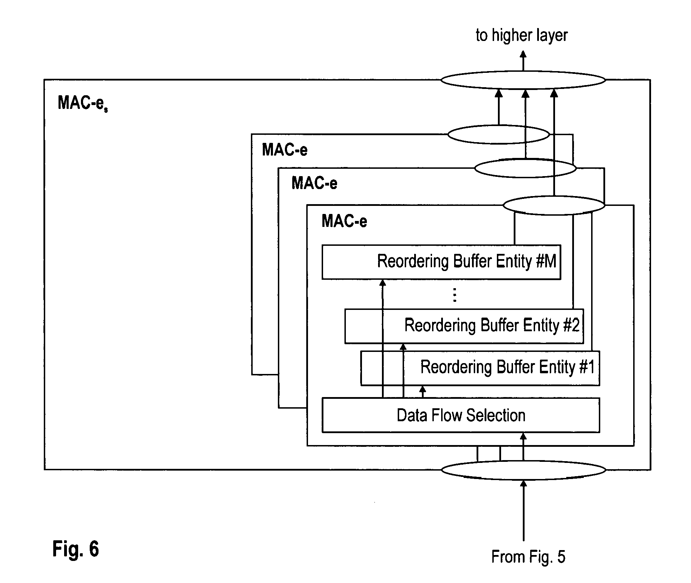

Every MAC-e entity corresponds to a user (UE). In Fig. 5 the Node B MAC-e architecture is depicted in more detail. It can be noted that each HARQ Receiver entity is assigned certain amount or area of the soft buffer memory for combining the bits of the packets from outstanding retransmissions. Once a packet is received successfully, it is forwarded to the reordering buffer providing the in-sequence delivery to upper layer. According to the depicted implementation, the reordering buffer resides in S-RNC during soft handover. In Fig. 6 the S-RNC MAC-e architecture which comprises the reordering buffer of the corresponding user (UE) is shown. The number of reordering buffers is equal to the number of data flows in the corresponding MAC-e entity on user equipment side. Data and control information is sent from all Node Bs within Active Set to S-RNC during soft handover.

It should be noted that the required soft buffer size depends on the used HARQ scheme, e.g. an HARQ scheme using incremental redundancy (IR) requires more soft buffer than one with chase combining (CC).

### E-DCH MAC Architecture for a Radio Access Network Architecture based on Functional Separation

When considering a functionally separated access network architecture and soft handover operation, it may be assumed that the MAC-e entities are distributed across Node B (MAC-e_{b}) and UPS on radio access network side. As with S-RNC for REL99/4/5 UTRAN architecture, MAC-e in the UPS in this case comprises macro-diversity combining and reordering function.

It should be noted that the protocol model for both architectures is distributed since MAC-e entities on the network side are divided across Node Bs/access points and RNCs/UPSs depending on the architecture which is assumed.

### Reordering function

In UMTS, several data flows may be multiplexed into one MAC-e PDU on UE side to improve efficiency of filling transmission frames. If RLC protocol is configured to work in the acknowledged (AM) mode, in-sequence delivery of RLC PDUs to the RLC entity on the network side is required in order to avoid unnecessary detection of losses and retransmissions on the RLC level.

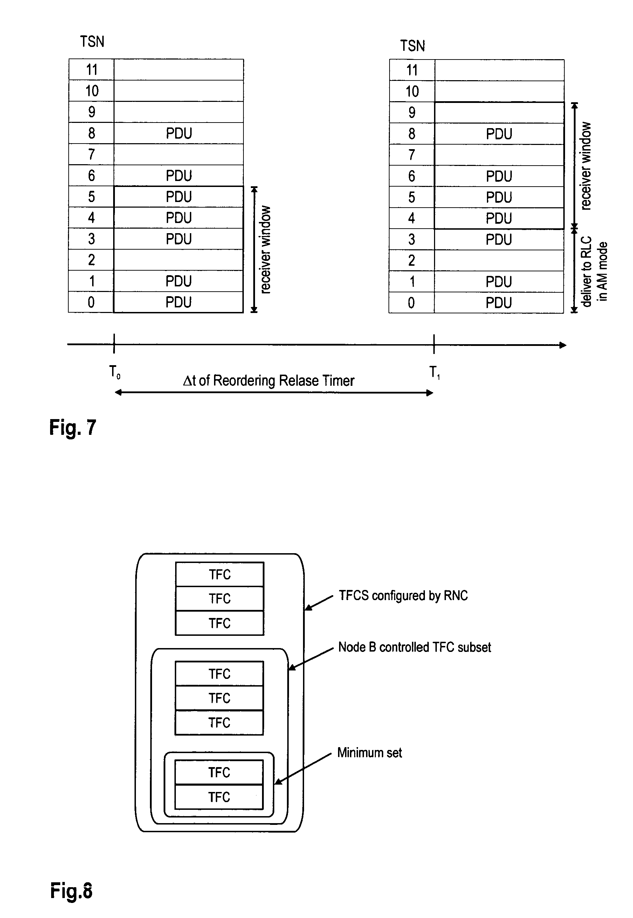

The operation of reordering function is determined by two major parameters, which are for the purpose of this report termed as Receiver Window and Reordering Release Timer, as illustrated in the Fig. 7. The Receiver Window sets up an upper bound for acceptable maximum data rate on the uplink. Whenever a PDU with TSN (Transmission Sequence Number) being larger than current upper edge of the Receiver Window enters reordering buffer, the Receiver Window is moved in the direction of increasingly larger TSNs and the PDUs which "fall" out of the window due to the movement are forwarded to the RLC receiving entity. The Receiver Window is also moved in the same direction after expiry of the Reordering Release timer thus allowing for detection of gaps within the sequence of PDUs by RLC receiving entity. As shown for exemplary purposes in Fig. 7, the PDU with TSN=2 is still missing when the Reordering Release Timer triggers moving the receiver window at T₁.

With respect to these two parameters, it could be possible that same are semi-statically configured by the SRNC (legacy architecture) or RCS (architecture based on functional separation) during transport channel establishment.

### E-DCH ― Node B controlled scheduling

Node B controlled scheduling is one of the technical features for E-DCH which is foreseen to enable more efficient use of the uplink power resource in order to provide a higher cell throughput in the uplink and to increase the coverage. The term "Node B controlled scheduling" denotes the possibility for the Node B to control, within the limits set by the RNC, the set of TFCs from which the UE may choose a suitable TFC. The set of TFCs from which the UE may choose autonomously a TFC is in the following referred to as "Node B controlled TFC subset".

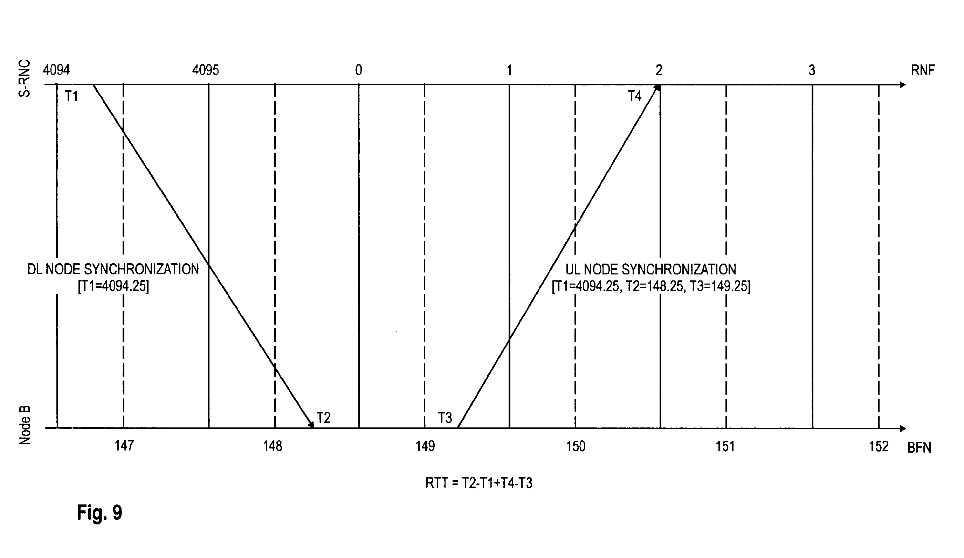

The "Node B controlled TFC subset" is a subset of the TFCS configured by RNC as seen in Fig. 8. The UE selects a suitable TFC from the "Node B controlled TFC subset" employing the Rel5 TFC selection algorithm. Any TFC in the "Node B controlled TFC subset" might be selected by the UE, provided there is sufficient power margin, sufficient data available and TFC is not in the blocked state. Two fundamental approaches to scheduling UE transmission for the E-DCH exist. The scheduling schemes can all be viewed as management of the TFC selection in the UE and mainly differs in how the Node B can influence this process and the associated signaling requirements.

### Node B controlled Rate Scheduling

The principle of this scheduling approach is to allow Node B to control and restrict the transport format combination selection of the user equipment by fast TFCS restriction control. A Node B may expand/reduce the "Node B controlled subset", which user equipment can choose autonomously on suitable transport format combination from, by Layer-1 signaling. In Node B controlled rate scheduling all uplink transmissions may occur in parallel but at a rate low enough such that the noise rise threshold at the Node B is not exceeded. Hence, transmissions from different user equipments may overlap in time. With Rate scheduling a Node B can only restrict the uplink TFCS but does not have any control of the time when UEs are transmitting data on the E-DCH. Due to Node B being unaware of the number of UEs transmitting at the same time no precise control of the uplink noise rise in the cell may be possible (see 3GPP TR 25.896: "Feasibility study for Enhanced Uplink for UTRA FDD (Release 6)", version 1.0.0, available at http://www.3gpp.org).

Two new Layer-1 messages are introduced in order to enable the transport format combination control by Layer-1 signaling between the Node B and the user equipment. A Rate Request (RR) may be sent in the uplink by the user equipment to the Node B. With the RR the user equipment can request the Node B to expand/reduce the "Node controlled TFC Subset" by one step. Further, a Rate Grant (RG) may be sent in the downlink by the Node B to the user equipment. Using the RG, the Node B may change the "Node B controlled TFC Subset", e.g. by sending up/down commands. The new "Node B controlled TFC Subset" is valid until the next time it is updated.

### Node B controlled Rate and Time Scheduling

The basic principle of Node B controlled time and rate scheduling is to allow (theoretically only) a subset of the user equipments to transmit at a given time, such that the desired total noise rise at the Node B is not exceeded. Instead of sending up/down commands to expand/reduce the "Node B controlled TFC Subset" by one step, a Node B may update the transport format combination subset to any allowed value through explicit signaling, e.g. by sending a TFCS indicator (which could be a pointer).

Furthermore, a Node B may set the start time and the validity period a user equipment is allowed to transmit. Updates of the "Node B controlled TFC Subsets" for different user equipments may be coordinated by the scheduler in order to avoid transmissions from multiple user equipments overlapping in time to the extent possible. In the uplink of CDMA systems, simultaneous transmissions always interfere with each other. Therefore by controlling the number of user equipments, transmitting simultaneously data on the E-DCH, Node B may have more precise control of the uplink interference level in the cell. The Node B scheduler may decide which user equipments are allowed to transmit and the corresponding TFCS indicator on a per transmission time interval (TTI) basis based on, for example, buffer status of the user equipment, power status of the user equipment and available interference Rise over Thermal (RoT) margin at the Node B.

Two new Layer-1 messages are introduced in order to support Node B controlled time and rate scheduling. A Scheduling Information Update (SI) may be sent in the uplink by the user equipment to the Node B. If user equipment finds a need for sending scheduling request to Node B (for example new data occurs in user equipment buffer), a user equipment may transmit required scheduling information. With this scheduling information the user equipment provides Node B information on its status, for example its buffer occupancy and available transmit power.

A Scheduling assignment (SA) may be transmitted in the downlink from a Node B to a user equipment. Upon receiving the scheduling request the Node B may schedule a user equipment based on the scheduling information (SI) and parameters like available RoT margin at the Node B. In the Scheduling Assignment (SA) the Node B may signal the TFCS indicator and subsequent transmission start time and validity period to be used by the user equipment.

The usage of either rate or time and rate scheduling is of course restricted by the available power, as the E-DCH will have to co-exist with a mix of other transmissions by that UE and other UEs in the uplink. The co-existence of the different scheduling modes may provide flexibility in serving different traffic types. For example, the applications demanding lower data rates may be sent over E-DCH in rate controlled mode while the applications demanding higher data rate may be sent over E-DCH in time and rate controlled mode.

### Mobility Management within Rel99/4/5 UTRAN

Before explaining some procedures connected to mobility management, some terms frequently used in the following are defined first.

A radio link may be defined as a logical association between single UE and a single UTRAN access point. Its physical realization comprises radio bearer transmissions.

A handover may be understood as a transfer of a UE connection from one radio bearer to another (hard handover) with a temporary break in connection or inclusion / exclusion of a radio bearer to / from UE connection so that UE is constantly connected UTRAN (soft handover). Soft handover is specific for networks employing Code Division Multiple Access (CDMA) technology. Handover execution may controlled by S-RNC in the mobile radio network when taking the present UTRAN architecture as an example.

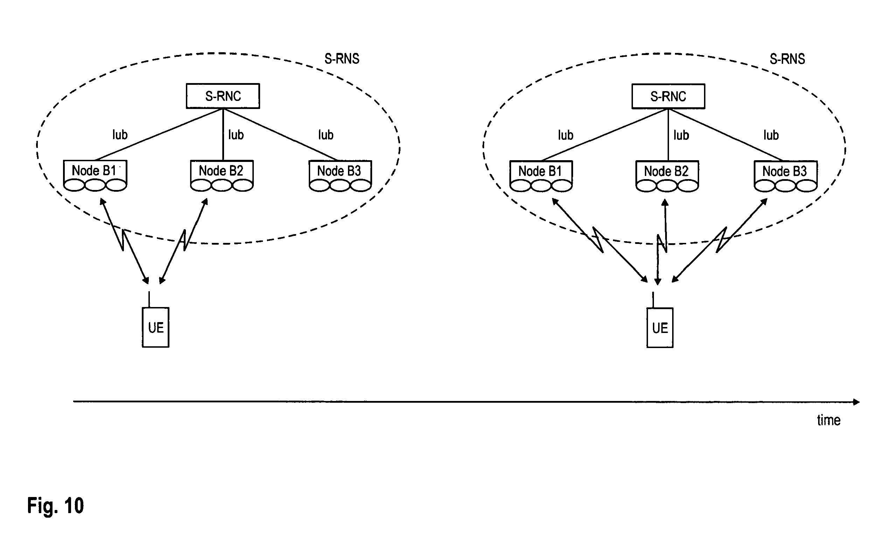

The active set associated to a UE comprises a set of radio links simultaneously involved in a specific communication service between UE and radio network. An active set update procedure may be employed to modify the active set of the communication between UE and UTRAN, for example during soft-handover. The procedure may comprise three functions: radio link addition, radio link removal and combined radio link addition and removal. The maximum number of simultaneous radio links is set to eight. New radio links are added to the active set once the pilot signal strengths of respective base stations exceed certain threshold relative to the pilot signal of the strongest member within active set. The addition of a new radio link is shown for exemplary purposes in Fig. 10.

A radio link is removed from the active set once the pilot signal strength of the respective base station exceeds certain threshold relative to the strongest member of the active set. Threshold for radio link addition is typically chosen to be higher than that for the radio link deletion. Hence, addition and removal events form a hysteresis with respect to pilot signal strengths.

Pilot signal measurements may be reported to the network (e.g. to S-RNC) from UE by means of RRC signaling. Before sending measurement results, some filtering is usually performed to average out the fast fading. Typical filtering duration may be about 200 ms contributing to handover delay. Based on measurement results, the network (e.g. S-RNC) may decide to trigger the execution of one of the functions of active set update procedure (addition / removal of a Node B to / from current Active Set).

### Node Synchronization

Node synchronization (see 3GPP TS 25.402: "Synchronization in UTRAN Stage 2 (Release 6)", V6.0.0, available at http//www.3gpp.org) is aimed at achieving common timing reference between different nodes in the network. In section 6.1.1 of this document the RNC ― Node B synchronization is described in more detail and the main aspects of this synchronization process will be outlined in the following in more detail.

The Node Synchronization between RNC and Node B (see Fig. 9) can be used to find out the timing reference differences between the UTRAN nodes (RFN in RNC and BFN in Node B). Knowledge of timing relationships between these nodes is based on a measurement procedure called RNC-Node B Node Synchronization Procedure. The procedure is defined in the user plane protocols for lub and lur for legacy dedicated transport channels.

When the procedure is used from SRNC over the DCH user plane, it allows finding out the actual round-trip-delay a certain service has since UUDL NODE SYNCHRONISATION FRAMES are transferred in the same way as DCH frames.

In the RNC-Node B Node Synchronization procedure, the RNC sends a DL NODE SYNCHRONISATION control frame to Node B containing the parameter T1. Upon reception of a DL NODE SYNCHRONISATION control frame, the Node B shall respond with UL NODE SYNCHRONISATION Control Frame, indicating T2 and T3, as well as T1 that was indicated in the initiating DL Node Synchronization control frame. The reception time of this latter message at the SRNC defines the parameter T4. The roundtrip time (RTT) may thus be estimated as RTT=T2-T1+T4-T3.

### Flow Control

A flow control mechanism is used for HS-DSCH data streams on the lub/lur interface in Rel5 and for DSCH data streams on lur interface in Re199. It is therefore used for downlink shared channels before termination point of the scheduling control function since air interface is seen as a bottleneck for data transmission. In the sequel, flow control mechanism for HS-DSCH (see 3GPP TR 25.877: "" High Speed Downlink Packet Access: lub/lur protocol aspects (Release 5)", V5.1.0, available at http://www.3gpp.org) on lub interface will be explained in more details.

Flow control for HS-DSCH is based on exchanging CAPACITY REQUEST CONTROL FRAME (in the direction CRNC -> Node B) and CAPACITY ALLOCATION CONTROL FRAME (in the direction Node B -> CRNC) with the former requesting certain number of credits and the latter granting certain capacity for transmission over lub interface. CONTROL FRAMEs themselves are not subject to flow control.

It is not clear whether flow control will be introduced for E-DCH. Firstly, the transport network layer (TNL) is usually not considered to be transmission bottleneck relative to the air interface. Secondly, as already noted above, different amounts of soft buffer may be required in Node B depending on combining scheme to be used. The amount of soft buffer also increases with increasing number of users supported in the cell controlled by a certain Node B.

In some Node B implementations it is possible that soft buffer memory space is dynamically shared with memory space used for storage of successfully received packets for a particular user. In general, the amount of available memory space used for both purposes is independent from RoT. Hence, under certain conditions Node B may require more available memory space to schedule more users on the uplink with higher data rates and it could require more capacity for transmitting correctly received packets to the SRNC then. On the other side, sometimes remaining amount of RoT may be low and Node B may not be able to schedule enough users to fill the noise rise bin. In this case it is not possible to use all capacity available on TNL.

Another aspect of flow control is that necessity for it may depend on a particular scheduling mode. As explained above, the time and rate scheduling mode may be more suitable for assigning transmission opportunities to a subset of UEs demanding higher data rates while rate scheduling mode is more suitable for assigning transmission opportunities to all UEs in the cell controlled by a given Node B.

It can be concluded that, under certain conditions, flow control may be beneficial for use on E-DCH. Flow control on the lub interface may be realized by exchanging CAPACITY REQUEST CONTROL FRAME (in the direction Node B->CRNC) and CAPACITY ALLOCATION CONTROL FRAME (in the direction CRNC->Node B).

### Some Configurable Parameters Relevant for Delay Performance of E-DCH

In this section, semi-statically configurable parameters relevant for delay performance of E-DCH are considered from user point of view. Indices relevant for scenarios from system point of view like Node B scheduling mode and radio resource availability are not explicitly considered in the following explanations.

Delay performance is important for fulfillment of QoS guarantees for delay-critical services (e.g. streaming class), while improved performance in terms of delay directly translates into increased throughput of interactive/background service class using reliable transport protocols for end-to-end transmission. From user point of view, a subset of RLC timers and the Reordering Release Timer related to MAC-e functionality will be considered in the following.

The RLC Timer_Poll_Prohibit prevents sending RLC entity on the UE side from polling the receiving entity on the network side for reception status. If the value of the timer were set too low, excessive and unnecessary RLC retransmissions would ensue. The value of this timer should generally be higher than the value of Reordering Release Timer. RLC Timer_Status_Prohibit prevents receiving RLC entity on the UE side from sending the status before the timer has expired. It may be seen as providing certain margin for setting of Timer_Poll_Prohibit with respect to MAC-e Reordering Release Timer.

Low-value settings of MAC-e Reordering Release Timer would reduce delay in terms of early detection of reception gaps and early triggering of RLC retransmissions (provided that RLC is configured in the acknowledged mode). Unexpected variations on uplink transmission path (e.g. increased delay with respect to timer settings) may lead to premature RLC retransmissions and wrap-around problem thus respectively causing spectrally inefficient wireless transmission and errors in protocol operation.

High Speed Downlink Packet Access (HSDPA) and Multimedia Broadcast Multicast Service (MBMS) are part of Releases 5 and 6 of UMTS standard, High Speed Uplink Access (HSUPA) is a research topic relevant for UMTS Release 7. The features will probably be deployed in respective temporal order in radio access network thus imposing additional requirements on transport network capacity and especially on "last mile" connection (i.e. lub in legacy UTRAN).

For example, the lub is not optimized for multicast transmission meaning that point-to-multipoint MBMS Radio Bearer will be mapped to a multiplicity of lub transport connections of point-to-point type. Depending on capital expenditure for "last mile" when deploying new features in the access network, larger or lower delays or more or less frequent congestion occurrences on this interface are possible.

As indicated above, the semi-static configuration of certain L2 parameters may impact some aspects of E-DCH operation (i.e. HSUPA). One parameter which may be of significant relevance for E-DCH operation is the delay in uplink transmissions. Delay variations may mostly originate from lub/lur interface and hence assessment of these delays in uplink direction can be considered a main problem.

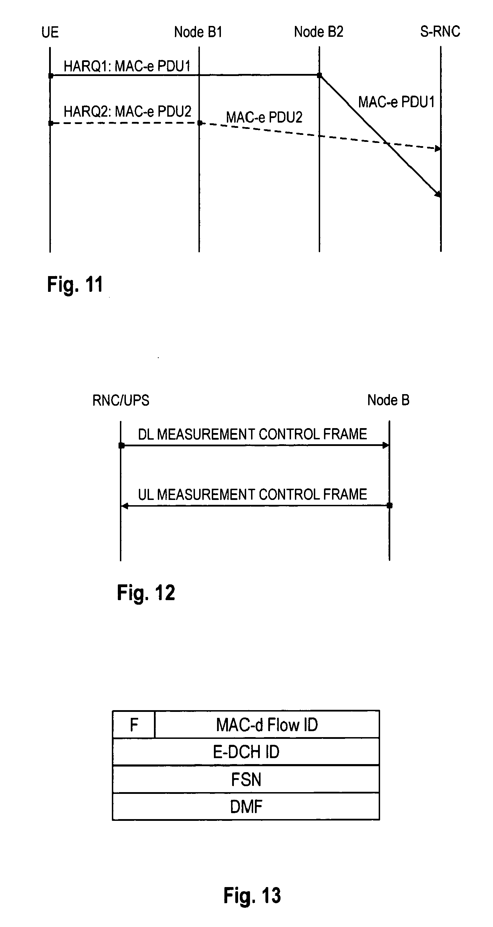

For exemplary purpose, soft handover operation of E-DCH will be considered in the following without loss of generality. In this respect, Fig. 11 illustrates a possible out-of-order arrival of correctly received packets from different Node Bs due to different lub/lur delays corresponding to transport bearers (TBs) configured from respective Node Bs towards RNC /UPS to illustrate the problems that may arise from delay variations on the wired interfaces between Node Bs and RNC/UPS.

### SUMMARY OF THE INVENTION

The object of the invention is to improve uplink data transmission efficiency in a mobile communication system.

The object is solved by the subject matter of the independent claims. Advantageous embodiments of the invention are subject matters to the dependent claims.

One main aspect of the invention is the measurement/estimation of the delay of the interface between a base station and a network element controlling the user plane, such as the RNC/UPS, and the configuration of at least one transport channel parameter based on the delay. The base station is thereby relaying uplink protocol data units from a transmitting mobile terminal to the network element controlling the user plane. Thereby the uplink data transmission efficiency may be significantly improved.

In an embodiment of the invention a method for configuring uplink data transmission in a mobile communication system comprising a radio access network and a mobile terminal is provided. According to this method, an uplink dedicated or uplink shared transport channel is established between the mobile terminal and a network element controlling the user plane of the radio access network.

Further the uplink data transmission delay on an interface between a base station and the network element controlling the user plane may be measured/estimated, and at least one parameter associated to the established transport channel may be configured by a network element controlling the mobile terminal related functions of the control plane of the radio access network, wherein the configuration is based on the determined uplink data transmission delay. The network element controlling the mobile terminal related functions of the control plane may be for example an RNC or an RCS.

According to another aspect of the embodiment the base station may schedule the uplink data transmission and may terminate a retransmission protocol for the uplink data transmission. The network element controlling the user plane may provide macro-diversity combining and reordering of uplink protocol data units. Thus, according to this aspect the embodiment of the invention is also applicable to distributed protocol architectures.

In another embodiment of the invention, the configured at least one parameter associated to the established transport channel is a reordering release timer of the reordering entity of the network element controlling the user plane. As outlined above in more detail, the setting of this parameter may play an important role for the performance of uplink transmissions and its optimization may therefore improve the overall performance significantly.

In a further embodiment of the invention the configured at least one parameter is the active set size of the mobile terminal. E.g. when an active set update procedure is performed, the size of the active set is changed due to a radio link (i.e. base station) being added, removed or replaced to/from/in the active set of the mobile terminal. As will be outlined in more detail below, it may be feasible in this situation to reassess the uplink transmission delay on the wired interfaces to between the base stations of the updated active set and the network element controlling the user plane, and in case the highest uplink transmission delay on a interface of a base station of the active set and the network element controlling the user plane change to the update procedure appropriate handling of the situation may be foreseen.

Another embodiment of the invention relates to the estimation process of the uplink transmission delay. According to this embodiment the estimation of the uplink data transmission delay comprises transmitting an uplink measurement control frame of the frame protocol from the base station to the network element controlling the user plane.

A further aspect of the embodiment foresees to compose the uplink measurement control frame at the base station, wherein the uplink measurement control frame comprises a delay measurement field allowing the determination of the uplink data transmission delay in the network element controlling the user plane.

According to another aspect of this embodiment, the delay measurement/estimation may be triggered by the network element controlling the user plane. A downlink measurement control frame may be transmitted from the network element controlling the user plane to the base station to request the transmission of the uplink measurement control frame.

The uplink measurement control frame and downlink measurement control frame may further comprise a control frame type identifier, a frame sequence number, an identifier of the uplink transport channel and a MAC-d flow identifier of the MAC-d flow containing the uplink transmission protocol data units. Thereby, a performance optimization on the MAC-d flow level becomes possible.

According to another embodiment of the invention, the estimation of the uplink transmission delay may be made based on the exchange of data frames. The base station may transmit a data frame of the frame protocol to the network element controlling the user plane. According to a further aspect, the base station may compose the data frame, wherein the data frame comprises a delay measurement field allowing the determination of the uplink data transmission delay in the network element controlling the user plane.

A further embodiment of the invention relates to synchronization issues. In this embodiment, a phase difference between internal base station reference timer and a reference timer of the network element controlling the user plane may be established by a node synchronisation procedure. Thereby, the delay measurement field may be set according to the internal reference timer of the base station.

Further, another embodiment of the invention foresees that the uplink data transmission delay is periodically estimated and the network element controlling mobile terminal related functions of the control plane configures the period after which the uplink data transmission delay estimation is periodically performed.

Alternatively, the uplink data transmission delay is estimated in an event-triggered manner. This alternative may comprise monitoring statistics on the arrival of the uplink protocol data units by the network element controlling the user plane and triggering an estimation of the uplink data transmission delay by sending a downlink measurement control frame if the monitored statistics fulfil predetermined criteria.

Another embodiment of the invention foresees triggering an estimation of the uplink data transmission delay if the active set of the mobile terminal is updated as indicated above. Thereby, the uplink transmission performance may be improved due to adapting the configuration of the uplink transport channel to possibly changing delays due to the active set reconfiguration.

It is important to note that the estimation of the uplink data transmission delay may performed for all base stations of the mobile terminal's active set, hence, for every base station. For example, when the mobile terminal is in soft-handover the delays of all base stations in the active set to the network element controlling the user plane may be estimated and the transport channel may be configured according to the estimated delay values.

As indicated previously, the network element controlling mobile terminal related functions of the control plane may configure the parameter(s) of the uplink transport channel. According to another embodiment of the invention, the network element controlling mobile terminal related functions of the control plane may receive the measured data transmission delay of at least one interface between a respective base station of the mobile terminal's active set and the network element controlling the user plane from the latter.

Further, in a variation of this embodiment, the configuration of the at least one parameter associated to the established transport channel based on the measured data transmission delay comprises combining measured data transmission delays received from the network element controlling the user plane by the network element controlling mobile terminal related functions of the control plane to choose a maximum data transmission delay. Thus, the network element controlling mobile terminal related functions of the control plane may evaluate the received delay values and may for example choose the highest estimated delay value as the maximum data transmission delay. Where feasible it could also be envisioned to combine the delay values to e.g. a mean delay value or the like.

Another variation foresees that the configuration of the at least one parameter associated to the established transport channel based on the measured data transmission delay comprises determining the value of a reordering release timer at the network element controlling mobile terminal related functions of the control plane based on the at least one measured data transmission delay received from the network element controlling the user plane and transmitting an indication of the reordering release timer value from the network element controlling mobile terminal related functions of the control plane to the network element controlling the user plane. Hence, the network element controlling mobile terminal related functions of the control plane may configure the reordering release timer value by means of signalling based on the measured data transmission delay.

Further, according to another aspect of this embodiment, the network element controlling mobile terminal related functions of the control plane may signal an indication of the reordering release timer value to the mobile terminal to enable the mobile terminal to stop retransmission of outdated protocol data units.

According to an even further aspect of the embodiment the network element controlling mobile terminal related functions of the control plane may signal an indication of the reordering release timer to the base station, and the base station may select the priority of the mobile terminal for scheduling the protocol data units by the base station based on the signalled reordering release timer value.

Another embodiment of the invention relates to a network element in a radio access network of a mobile communication system for processing uplink protocol data units of a mobile terminal in the mobile communication network. The network element may comprise processing means for processing the user plane protocol data units of the uplink data transmission, and communication means for establishing an uplink dedicated or shared transport channel between the mobile terminal and the network element for transporting the uplink protocol data units. The processing means may be further adapted to determine an uplink data transmission delay on an interface between a base station of the radio access network and the network element, wherein uplink protocol data units are provided through said interface.

The network element may be adapted to set at least one parameter associated to the established transport channel based on a signalling message received from a network element controlling mobile terminal related functions of the control plane, wherein the information comprised in the signalling message is based on the determined uplink data transmission delay.

Further, according to another embodiment of the invention, the network element controlling the user plane according may comprise means allowing same to participate in the configuration method according to one of different embodiments and variations thereof outlined above.

Another embodiment of the invention relates to a network element in a radio access network of a mobile communication system for configuring uplink data transmission of a mobile terminal in said system. This network element may comprise control means for controlling mobile terminal related functions of the control plane, and communication means for controlling the establishment of an uplink dedicated or shared transport channel between the mobile terminal and a network element controlling the user plane, wherein the transport channel is established for transporting the uplink data in protocol data units. The communication means may be adapted to receive information on an uplink data transmission delay of at least one interface between a respective base station of the mobile terminal's active set and the network element controlling the user plane, wherein uplink protocol data units are transmitted through said interface.

Further, the network element may be adapted to configure a value of at least one parameter associated to the established transport channel in the network element controlling the user plane, and to determine the at least one parameter based on the received information on the uplink data transmission delay.

In another embodiment, the network element controlling mobile terminal related functions of the control plane further comprises means allowing same to participate in the configuration method according to one of different embodiments and variations thereof outlined above.

Moreover, a further embodiment of the invention relates to a base station in a radio access network of a mobile communication system receiving uplink protocol data units of a mobile terminal and transmitting the uplink protocol data units to a network element of the radio access network controlling the user plane. According to this embodiment, the base station may comprise communication means for relaying transport channel establishment messages to establish an uplink dedicated or shared transport channel between the mobile terminal and a network element of the radio access network controlling the user plane, and processing means for forming and transmitting an uplink measurement control frame of the frame protocol or data frames of the frame protocol, said frames comprising a delay measurement field allowing the determination of the uplink data transmission delay between the base station and the network element controlling the user plane. Further, the communication means is adapted to transmit said frames to the network element controlling the user plane.

According to another embodiment the base station further comprises means allowing same to participate in the configuration method according to one of different embodiments and variations thereof outlined above.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows the high-level architecture of UMTS,
- **Fig. 2**: shows the architecture of the UTRAN according to UMTS R99/4/5,
- **Fig. 3**: shows a Drift and a Serving Radio Subsystem,
- **Fig. 4**: shows an exemplary RAN architecture based on function separation,
- **Fig. 5**: shows the MAC-e architecture at a Node B,
- **Fig. 6**: shows the MAC-e architecture at a RNC,
- **Fig. 7**: shows transport format combination sets for Node B controlled scheduling,
- **Fig. 8**: shows the operation of the reordering function of the reordering entity at the RNC/UPS,
- **Fig. 9**: shows an exemplary RNC-Node B synchronization procedure,
- **Fig. 10**: shows an exemplary operation of the E-DCH during soft handover,
- **Fig. 11**: shows an exemplary out-of-order arrival of correctly received PDUs at the S-RNC due to lub/lur delays,
- **Fig. 12**: shows an exemplary uplink transmission delay measurement procedure on the lub/lur interface by using control frames of the EDCH frame protocol according to an embodiment of the invention, and
- **Fig. 13**: shows an exemplary format of an UUDL measurement (request) control frame according to an embodiment of the invention.

### DETAILED DESCRIPTION OF THE INVENTION

The following paragraphs will describe various embodiments of the invention. For exemplary purposes only, most of the embodiments are outlined in relation to a UMTS communication system and the terminology used in the subsequent sections mainly relates to the UMTS terminology. However, the used terminology and the description of the embodiments with respect to a UMTS architecture is not intended to limit the principles and ideas of the inventions to such systems.

Also the detailed explanations given in the Technical Background section above are merely intended to better understand the mostly UMTS specific exemplary embodiments described in the following and should not be understood as limiting the invention to the described specific implementations of processes and functions in the mobile communication network.

The ideas and principles that will be outlined in the subsequent sections may be applicable to the operation of shared or dedicated uplink transport channels. More specifically, the principles may be for example advantageously applied to wireless communication systems using a distributed protocol model in legacy UTRAN architecture or in the access network architecture based on functional separation outlined above.

For example, the distributed protocol model may denote systems in which Node Bs schedule the uplink data transmission (e.g. on E-DCHs) and provide a retransmission protocol, such as HARQ, for the uplink data transmission. Further, the network element controlling the user plane (RNC or UPS depending on the underlying network architecture assumed) provides macro-diversity combining and reordering of uplink protocol data units.

It is further important to note that the terms RNC and RCS/UPS signify logical distribution of functions between network elements. Network elements may communicate over standardized interfaces. The physical realization or deployment may be different than logical functional split. For example, RCS, UPS (and even Node B) may be combined into one physical node.

According to one main aspect of the invention, it is noticed that generally lub/lur delays of each Node B within an Active Set may be different and subject to different dimensioning of last mile resources when deploying new features in the access network. These delays may be measured or determined by the UPS and may be used to configure various parameters of an uplink transport channel used for e.g. E-DCH uplink data transmission. For example, the value of the Reordering Release Timer may be configured in accordance with the measured delay on the wired interface(s) and may e.g. be set to the highest uplink transport delay in the Active Set.

Also, after performing and Active Set Update procedure, it may be important to reassess the uplink delays in order to decide whether to keep some Node Bs in the Active Set or not in order to prevent a significant impact on the uplink performance (e.g. E-DCH performance) for example due to unacceptable uplink delay of an Node B in the Active Set. Further, when removing a Node B from the Active Set it may be foreseen to reconfigure the transport channel parameters, such as the value of Reordering Release Timer.

Due to lack of transport network layer (TNL) capacity or inadequate flow control settings, the S-RNC/S-UPS (Serving UPS) may not receive packets on E-DCH for a long time. In this case, it would be beneficial that the transport bearer associated with particular E-DCH is evaluated to assess whether the problem occurs on the wired interface or wireless interface.

Moreover, it should be noted that according to the invention the uplink delay on the wired interfaces may be determined/measured on a per-data flow basis in contrast to delay estimation in the standardized network node synchronization procedures which merely allow the estimation of the RTT for legacy channels on a per-transport bearer basis (TB). Hence, the invention allows providing a more accurate estimation of delays on the wired interfaces for individual data flows enabling the optimization of uplink transmission on a per-data flow basis within the RAN.

In the following different embodiments of the invention are described in further detail with respect to the configuration of the Reordering Release Timer as an example for the configuration of a parameter associated to an uplink transport channel based on a measured uplink delay on the wired interface(s) in the RAN.

In this respect measurement procedures and corresponding control and data frame formats of frame protocol (FP) for E-DCH data streams are introduced. Further, it is also possible to reconfigure the timer after reassessing the delays.

In an exemplary embodiment of the invention it is assumed that RLC timers are set conservatively enough so that possible reconfiguration of Reordering Release Timer does not affect RLC operation, i.e. it is assumed that following condition always holds:
Min {Timer_Poll_Prohibit, Timer_Status_Prohibit} >
Reordering_Release_Timer + implementation_specific_margin.

Delay measurement may be performed in two ways. Firstly, CONTROL FRAMEs of E-DCH FP may be exchanged between Node B and RNC (UPS) to assess delay in the uplink direction. Secondly, measurements may be conducted based on DATA FRAMEs. Also a combination of these two methods is possible.

According to this embodiment of the invention the Reordering Release Timer of the reordering buffer in RNC/UPS is set or reconfigured based on the one-way delay estimated by CONTROL FRAMEs or DATA FRAMEs.

The measurements of the uplink delay by means of CONTROL FRAMEs may be conducted either on periodical or event-triggered basis. In case of periodical measurements, the periodicity of sending DL MEASUREMENT CONTROL FRAME may be configured internally in the RNC per transport bearer assigned to the E-DCH carrying the uplink transmission (legacy UTRAN architecture) or the periodicity may be configured by the RCS for the UPS (over lui interface for radio access network architecture based on functional separation).

In case of event-triggered measurements, RNC/UPS may monitor arrival statistics of PDUs and launch measurements once certain criteria are met. For example, in case of transporting streaming type traffic on the uplink channel, the arrival statistics of the protocol data units in which the uplink data is provided may be compared against a requested delay. E.g. if less than 95% of packets observed in configurable time interval are not delivered within proscribed delay bound, a DL MEASUREMENT CONTROL FRAME may be sent from RNC/ UPS to Node B to check whether congestion has ensued on lub/lur interface. Alternatively, also the status of Reordering Release Timer may be monitored before initiating the measurement procedure.

For interactive/background type of traffic, RNC/UPS may for example monitor whether packets arrive in certain time or not before launching the measurement procedure.

An exemplary measurement procedure using CONTROL FRAMEs is depicted in Fig. 12. According to this exemplary embodiment the RNC/UPS sends a DL MEASUREMENT CONTROL FRAME to Node B to trigger the delay measurement. The Node B replies with sending UL MEASUREMENT CONTROL FRAME. By monitoring the time difference between sending the first and receiving the second frame, RNC/UPS may determine the value of round-trip-time delay and may also derive the one-way uplink delay.

An exemplary format of MEASUREMENT CONTROL FRAMES is depicted in Fig. 13. The field F (flag) is provided for identifying the frame type of the transmitted frame. As explained previously, the data flows (i.e. the MAC-d flows) contained within one E-DCH transport channel may be mapped on separate transport bearers in the transport network layer or may be multiplexed onto a single transport bearer.

The format of MEASUREMENT CONROL FRAMEs may provide identification of the delay on the wired interface down to per MAC-d flow accuracy for the purpose of matching sent DL MEASUREMENT CONTROL FRAME to its peer received UL MEASUREMENT CONTROL FRAME and correctly calculating round trip time and uplink delay by the RNC/UPS.

Therefore, fields FSN (Frame Sequence Number), E-DCH ID (enhanced dedicated channel identifier) and MAC-d FLOW ID are used for identification. E-DCH ID is unique per UE as there is one CCTrCh of E-DCH type per UE and one E-DCH per CCTrCh of E-DCH type. The FSN may be calculated with respect to a certain modulus and may be incremented every time a new frame with of a particular E-DCH ID and MAC-d FLOW ID is sent from RNC/UPS.

Most important, the uplink (UL) message format comprises a Delay Measurement Field (DMF) that is mandatory inserted by Node B in UL MEASUREMENT CONTROL FRAME.

Similar to the synchronization principles as used in UTRAN for downlink transmission and after node synchronization having been carried out, when receiving the UL MEASUREMENT CONTROL FRAME at the RNC/UPS from the Node B and by knowing phase difference between RFN and BFN (Node B Frame Number), the receiving network element (RNC/UPS) may calculate the one-way-delay in the uplink direction across wired interface.

The proposed control frame format provides flexibility for any possible type of correspondence (one-to-one and many-to-one) between MAC-d flows and transport bearers.

In another embodiment of the invention DATA FRAMES are employed for determination of the uplink delay on the wired interfaces. The proposed measurement procedure by E-DCH FP DATA FRAMEs is carried out by embedding a Delay Measurement Field (DMF) in the uplink direction (towards RNC/UPS) by the Node B / access point.

The sending network element may simply insert current state of its internal reference timer with given granularity to this field. Specifically, with synchronization principles as used in UTRAN and after node synchronization that has been carried out, when receiving this frame and by knowing phase difference between RFN and BFN, receiving network element (RNC/UPS) may calculate one-way-delay in the uplink direction across wired interface. All means for identification with accuracy up to MAC-d flow are already provided within said DATA FRAMEs. In contrast to the use to CONTROL FRAMEs, it should be noted that DATA FRAMEs may be subject to flow control.

Moreover, it should be noted that in another embodiment of the invention, the measurement methods using MEASUREMENT CONTROL FRAMEs and DATA FRAMEs may be also advantageously combined. Measurements by DATA FRAMEs may be initiated by Node B and can be executed only when there are data frames available for delivery from Node B in uplink direction. They are sent more frequently relative to MEASUREMENT CONTROL FRAMEs. Furthermore, the DATA FRAMEs may be subject to flow control and can be therefore used for fine-tuning of the algorithm settings.

In contrast thereto, measurements by CONTROL FRAMEs are initiated by RNC / UPS and may be used when there are no upcoming packets in spite of some transport capacity allocated by means of flow control.

In order to obtain a higher precision determining the uplink delays on the wired interface between a Node B and a RNC/UPS it is suggested in another embodiment of the invention to observe several successive DATA FRAMEs and/or MEASUREMENT CONTROL FRAMEs in the RNC /UPS in order to average out fast delay variations.

When considering radio mobility, the delay estimate obtained though the measurement procedure(s) described above may be corrected after Active Set Update Radio Link Addition Function and after Active Set Update Radio Link Deletion Function. In particular, in case that the Radio Link of the removed Node B has had the highest delay in the latest estimate a reassessment of the uplink delays of the Active Set's Node B-RNC/UPS interface(s) may be measured.

In this respect it should be recognized that depending on the Active Set size of the UE for E-DCH transmission, the RNC/UPS may determine the delays on the interfaces between all Node Bs of the Active Set and the RNC/UPS.

In case of assuming an access network architecture with functional separation, the delay values of all interfaces may be communicated from the UPS to the RCS. Upon receiving the delay information the RCS may evaluate the delay values and may form a combined delay value based on which parameters of the transport channel is (re)configured. For example, when configuring the Reordering Release Timer the RCS may for example choose the highest uplink delay value among the signaled delay values as the combined value and may configure the Reordering Release Timer based on this determined value, e.g. by means of signaling to the UPS.

Further, it may also be beneficial that the value of Reordering Release Timer is signaled to the UE and Node Bs of the UE's Active Set. Based on the value of the timer, a UE may for example abort the transmission of outdated packets. A Node B may for example assign a particular UE to a subset of UEs that are allowed to transmit in rate and time scheduling mode with certain priority, based on the value of the timer.

Once the value of the Reordering Release Timer has been internally changed by SRNC/RCS according to one of delay measurements, the new value may thus be signaled to the UE as an IE of RRC protocol message and to the Node B as an IE of NBAP protocol message (e.g. as an IE of the IE E-DCH *Information to Modify* IE of RADIO LINK RECONFIGURATION PREPARE or RADIO LINK RECONFIGURATION COMMIT messages).

Another embodiment of the invention relates to the implementation of the above described various embodiments using hardware and software. It is recognized that the various above mentioned methods as well as the various logical blocks, modules, circuits described above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A method for configuring uplink data transmission in a mobile communication system comprising a radio access network and a mobile terminal, the method comprising the steps of:
establishing an uplink dedicated or shared transport channel between the mobile terminal and a network element controlling the user plane of the radio access network,
estimating an uplink data transmission delay on an interface between a base station and the network element controlling the user plane, and
configuring at least one parameter associated to the established transport channel by a network element controlling the mobile terminal related function of the control plane of the radio access network,
wherein the configuration is based on the determined uplink data transmission delay.

2. The method according to claim 1, wherein the base station schedules the uplink data transmission and terminates a retransmission protocol for the uplink data transmission, and wherein the network element controlling the user plane provides macro-diversity combining and reordering of uplink protocol data units.

3. The method according to claim 1 or 2, wherein the configured at least one parameter associated to the established transport channel is a reordering release timer of the reordering entity of the network element controlling the user plane.

4. The method according to one of claims 1 to 3, wherein the configured at least one parameter is the active set size of the mobile terminal.

5. The method according to one of claims 1 to 4, wherein the estimation of the uplink data transmission delay comprises transmitting an uplink measurement control frame of the frame protocol from the base station to the network element controlling the user plane.

6. The method according to claim 5, further comprising the step of composing the uplink measurement control frame at the base station, the uplink measurement control frame comprising a delay measurement field allowing the determination of the uplink data transmission delay in the network element controlling the user plane.

7. The method according to one of claims 5 to 6, further comprising the step of transmitting a downlink measurement control frame from the network element controlling the user plane to the base station to request the transmission of the uplink measurement control frame.

8. The method according to one of claims 5 to 7, wherein the uplink downlink measurement control frame and the downlink measurement control frame further comprise a control frame type identifier, a frame sequence number, an identifier of the uplink transport channel and a MAC-d flow identifier of the MAC-d flow containing the uplink transmission protocol data units.

9. The method according to one of claims 1 to 8, wherein the estimation of the uplink data transmission delay comprises transmitting a data frame of the frame protocol from the base station to the network element controlling the user plane.

10. The method according to claim 9, further comprising the step of composing the data frame at the base station, the data frame comprising a delay measurement field allowing the determination of the uplink data transmission delay in the network element controlling the user plane.

11. The method according to one of claims 1 to 10, further comprising the step of establishing a phase difference between internal base station reference timer and reference timer of the network element controlling the user plane by a node synchronisation procedure.

12. The method according to claim 11, wherein the delay measurement field is set according to the internal reference timer of the base station.

13. The method according to one of claims 1 to 12, wherein the uplink data transmission delay is periodically estimated and the network element controlling mobile terminal related functions of the control plane configures the period after which the uplink data transmission delay estimation is periodically performed.

14. The method according to one of claims 1 to 12, wherein the uplink data transmission delay is estimated in an event-triggered manner.

15. The method according to claim 14, further comprising the steps of monitoring by the network element controlling the user plane statistics on the arrival of the uplink protocol data units and
triggering an estimation of the uplink data transmission delay by sending downlink measurement control frame if the monitored statistics fulfil predetermined criteria.

16. The method according to claim 7 or 10, further comprising the step of triggering an estimation of the uplink data transmission delay if the active set of the mobile terminal is updated.

17. The method according to one of claims 1 to 16, wherein the estimation of the uplink data transmission delay is performed for every base station in the active set of the mobile terminal.

18. The method according to one of claims 1 to 17, further comprising the step of receiving by the network element controlling mobile terminal related functions of the control plane from the network element controlling the user plane the measured data transmission delay of at least one interface between a respective base station of the mobile terminal's active set and the network element controlling the user plane.

19. The method according to claim 18, wherein the configuration of the at least one parameter associated to the established transport channel based on the measured data transmission delay comprises combining measured data transmission delays received from the network element controlling the user plane by the network element controlling mobile terminal related functions of the control plane to choose a maximum data transmission delay.

20. The method according to claim 18 or 19, wherein the configuration of the at least one parameter associated to the established transport channel based on the measured data transmission delay comprises determining the value of a reordering release timer at the network element controlling mobile terminal related functions of the control plane based on the at least one measured data transmission delay received from the network element controlling the user plane and
transmitting an indication of the reordering release timer value from the network element controlling mobile terminal related functions of the control plane to the network element controlling the user plane.

21. The method according to claim 20, further comprising the step of the signalling an indication of the reordering release timer value from the network element controlling mobile terminal related functions of the control plane to the mobile terminal to enable the mobile terminal to stop retransmission of outdated protocol data units.

22. The method according to claim 20 or 21, further comprising the steps of the signalling an indication of the reordering release timer from the network element controlling mobile terminal related functions of the control plane to the base station, and
selecting the priority of the mobile terminal for scheduling the protocol data units by the base station based on the signalled reordering release timer value.

23. A network element in a radio access network of a mobile communication system for processing uplink protocol data units of a mobile terminal in the mobile communication network, said network element comprising:
processing means for processing the user plane protocol data units of the uplink data transmission,
communication means for establishing an uplink dedicated or shared transport channel between the mobile terminal and the network element for transporting the uplink protocol data units,
wherein the processing means is adapted to determine an uplink data transmission delay on an interface between a base station of the radio access network and the network element, wherein uplink protocol data units are provided through said interface, and
the network element is adapted to set at least one parameter associated to the established transport channel based on a signalling message received from a network element controlling mobile terminal related functions of the control plane, wherein the information comprised in the signalling message is based on the determined uplink data transmission delay.

24. The network element controlling the user plane according to claim 23, further comprising means adapted to perform the steps of the method according to one of claims 1 to 22.

25. A network element in a radio access network of a mobile communication system for configuring uplink data transmission of a mobile terminal in said system, said network element comprising:
control means for controlling mobile terminal related functions of the control plane,
communication means for controlling the establishment of an uplink dedicated or shared transport channel between the mobile terminal and a network element controlling the user plane, wherein the transport channel is established for transporting the uplink data in protocol data units, and
wherein the communication means is adapted to receive an information on an uplink data transmission delay of at least one interface between a respective base station of the mobile terminal's active set and the network element controlling the user plane, wherein uplink protocol data units are transmitted through said interface, and
wherein the network element is adapted to configure a value of at least one parameter associated to the established transport channel in the network element controlling the user plane, and
wherein the network element is adapted to determine the at least one parameter based on the received information on the uplink data transmission delay.

26. The network element controlling mobile terminal related functions of the control plane according to claim 25, further comprising means adapted to perform the steps of the method according to one of claims 1 to 22.

27. A base station in a radio access network of a mobile communication system receiving uplink protocol data units of a mobile terminal and transmitting the uplink protocol data units to a network element of the radio access network controlling the user plane, the base station comprising:
communication means for relaying transport channel establishment messages to establish an uplink dedicated or shared transport channel between the mobile terminal and a network element of the radio access network controlling the user plane,
processing means for forming and transmitting an uplink measurement control frame of the frame protocol or data frames of the frame protocol, said frames comprising a delay measurement field allowing the determination of the uplink data transmission delay between the base station and the network element controlling the user plane, and
wherein the communication means is adapted to transmit said frames to the network element controlling the user plane.

28. The base station according to claim 27, wherein the base station further comprises means to perform the method steps of the method according to claims 5 to 10.
